## Europäisches Patentamt

## European Patent Office

## Office européen des brevets

(11) Numéro de publication: **0 101 347**
**B1**

# FASCICULE DE BREVET EUROPÉEN

(45) Date de publication du fascicule du brevet:
24.09.86

(51) Int. Cl.⁴: **C 01 B 25/41, C 11 D 3/06**

(21) Numéro de dépôt: **83401467.2**

(22) Date de dépôt: **18.07.83**

(54) **Tripolyphosphate de sodium à vitesse d'hydratation élevée et compositions lessivielles le renfermant.**

(30) Priorité: **27.07.82 FR 8213065**
**28.04.83 FR 8307006**

(43) Date de publication de la demande:
**22.02.84 Bulletin 84/8**

(45) Mention de la délivrance du brevet:
**24.09.86 Bulletin 86/39**

(84) Etats contractants désignés:
**AT BE CH DE FR GB IT LI LU NL SE**

(56) Documents cité:
**EP-A-0 069 643**
**EP-A-0 070 216**
**FR-A-2 257 326**
**FR-A-2 419 754**
**FR-A-2 431 321**

**KIRK-OTHMER "ENCYCLOPEDIA OF CHEMICAL TECHNOLOGY" TROISIEME EDITION, TOME 17 PAGE 451**

(73) Titulaire: **RHONE- POULENC CHIMIE DE BASE, 25, quai Paul Doumer, F-92408 Courbevoie (FR)**

(72) Inventeur: **Couffin, Frédéric, 8 bis, rue Corneille, F-91230 Montgeron (FR)**
Inventeur: **Magnier, Claude, 3, rue des Chaufourniers, F-75019 Paris (FR)**

(74) Mandataire: **Martin, Henri, RHONE- POULENC INTERSERVICES Service Brevets Chimie 25, quai Paul Doumer, F-92408 Courbevoie Cédex (FR)**

## Description

La présente invention a trait à un tripolyphosphate de sodium à vitesse d'hydratation élevée. Elle concerne également les compositions lessivielles le renfermant et les bouillies pulvérisables qui conduisent auxdites compositions par atomisation.

On sait que dans le procédé de préparation des lessives, on tend dans une première étape à transformer le tripolyphosphate de sodium anhydre (TPP) de manière aussi quantitative que possible en tripolyphosphate de sodium hexahydraté dans le milieu lessiviel aqueux comprenant les autres constituants de la lessive.

La bouillie résultant de cette première étape est ensuite atomisée dans un tour d'atomisation et conduit à la lessive en poudre. Cette transformation quantitative du TPP anhydre en TPP hexahydraté s'impose pour éviter aux utilisateurs de lessives les inconvénients de prise en masse de la lessive et de dégagement excessif de chaleur qui résulteraient d'une hydratation incomplète du TPP anhydre.

La première qualité recherchée du TPP est donc de pouvoir s'hydrater aussi vite et aussi quantitativement que possible.

La seconde qualité est une viscosité qui permet à la bouillie faite à partir de ce TPP d'être pompée et pulvérisée.

Ces propriétés d'hydratation sont étroitement liées à la qualité du TPP (taux de pyrophosphate et polyphosphate) ainsi qu'à d'autres caractéristiques telles que la granulométrie, taux de phase I, etc...

Ainsi, dans le cas de TPP en vue de la fabrication de poudre détergente par atomisation, le choix du TPP s'oriente généralement vers des TPP à forte proportion de phase II, permettant de réduire la viscosité, malheureusement au détriment de la vitesse d'hydratation.

Dans la demande européenne EP-A-70 216 déposée le 6 juillet 1981 au nom de la demanderesse, on a décrit un procédé de traitement thermique et/ou chimique d'une phase dispersable fluide telle que liquide par une phase gazeuse dispersante, caractérisée par le fait que, successivement, et sans discontinuité, par action de la phase gazeuse:

a) on transforme la phase dispersable en une dispersion de volumes élémentaires, tels que fines particules solides ou liquides, sensiblement équirépartis dans ladite phase gazeuse, de manière à obtenir un mélange systématiquement homogène des deux phases dispersable et dispersante;

b) on fait subir à cette dispersion un traitement flash dans une zone à écoulement de type piston;

c) on soumet la dispersion issue de la zone b dans une zone à écoulement homogène au sens de la répartition des temps de séjour, à un traitement à la fois sensiblement isotherme et chimiquement homogène.

Or les travaux de la demanderesse ont montré qu'il était également possible d'obtenir un TPP à vitesse d'hydratation élevée et conduisant à des bouillies pompables et pulvérisables par un procédé qui consiste:

a) à préparer une solution d'orthophosphates de sodium mono et disodique de rapport molaire global Na/P compris entre 1,64 et 1,70.

b) à former un écoulement puits-tourbillon symétrique, avec une phase gazeuse chaude à grande quantité de mouvement, le rapport des quantités de mouvement entre les phases gazeuse et liquide étant compris entre 100 et 10.000

c) à introduire la solution d'orthophosphates préparée en a) dans la zone en dépression relative dudit écoulement puits-tourbillon, de manière à provoquer la dispersion et le traitement thermique de ladite solution d'orthophosphates par la phase gazeuse, de manière à obtenir du tripolyphosphate.

d) à soumettre le produit obtenu en c) à un traitement thermique complémentaire par chauffage.

Avantageusement, la vitesse d'introduction de la solution de départ est faible et de préférence inférieure à 10 m/seconde.

De préférence la pression de la phase gazeuse est également faible, inférieure à $10^5$ Pa.

Avantageusement la solution de départ peut être obtenue par neutralisation de $H_3PO_4$ voie humide par Na OH, l'acide ayant préalablement ou non subi une purification par extraction par solvant. On peut aussi utiliser l'acide obtenu par voie thermique.

Comme dit précédemment le rapport molaire $Na_2O/P_2O_5$ de cette solution est compris entre 1,64 et 1,70. La solution de départ comprend de 15% à 55% d'extrait sec (poids).

La température de traitement de la solution en c est comprise, de préférence, entre 300 et 450°C.

Le TPP obtenu subit le traitement thermique complémentaire en d à une température en particulier comprise entre de 400 à 500°C, soit en prolongeant la zone c, soit en l'effectuant dans une zone séparée.

Si on effectue le traitement thermique complémentaire en prolongeant la zone c, c'est-à-dire en continu, avantageusement le temps de traitement est compris entre 0,5 et 10 secondes.

Si le traitement complémentaire est effectué en discontinu, le temps est avantageusement compris entre 1 et 60 mm.

Le procédé selon l'invention conduit, de manière surprenante, à un produit qui cumule des qualités considérées jusque là comme contradictoires, à savoir une faible viscosité, qualité reconnue de la phase II et une vitesse d'hydratation élevée, qualité essentielle de la phase I.

On peut donc considérer que le produit est nouveau en soi et cumule les avantages des deux phases, connues et utilisées jusqu'à ce jour, en pouvant même présenter des niveaux de qualité supérieurs à la somme de ceux des deux phases I et II, prises séparément.

Bien que l'on ne soit pas actuellement en état d'en expliquer les raisons, le comportement rhéologique de ce produit est très différent de ceux des TPP étudiés jusqu'à maintenant, alors même que la structure, telle qu'appréhendée aux rayons X, correspond à celle d'une phase I.

Mais on sait que le comportement dépend non seulement du TPP mais aussi des autres constituants qui entrent dans la composition en formulation lessivielle.

Celle-ci comprend notamment des tensio-actifs qui ont une fonction détergente. Parmi ceux-ci, les tensio-actifs non-ioniques sont les plus exigeants, surtout du point de vue de la viscosité lorsque le TPP est de type phase I.

Or, la demanderesse a trouvé que l'on pouvait obtenir des bouillies pour la pulvérisation et l'atomisation présentant une faible viscosité même en présence de tensio-actifs tels que de nature anionique ou non-ionique.

L'invention a donc trait à une composition lessivielle conduisant à une bouillie pulvérisable à base de tripolyphosphate de sodium à vitesse d'hydratation élevée, renfermant des tensio-actifs et notamment des tensio-actifs non ioniques.

Une bouillie pulvérisable, selon l'invention, comprend avantageusement, en poids:
- de 10 à 40 % de tripolyphosphate de sodium compté en anhydre
- de 1 à 20 % de tensio-actifs
- de 10 à 30 % de composés divers (silicates, sulfates, savons et additifs divers)
- de 20 à 60 % d'eau

Les tensio-actifs sont de type anionique tel que dodécylbenzène sulfonate de sodium (ou lauryl benzène sulfonate) ou non-ionique tels que alcools linéaires éthoxylés, comme par exemple des coupes d'alcools en $C_{11}$ à $C_{18}$ éthoxylés à 6 à 50 moles d'oxyéthylène.

Le tripoliphosphate, selon l'invention, peut aussi être utilisé comme co-builder (co-auxiliaire de détergence) et peut être en particulier associé à une zéolite de type A.

Dans ce cas, une difficulté à vaincre consiste à éviter l'hydrolyse du TPP lors du séchage de la bouillie par atomisation.

La demanderesse a observé que, d'une manière générale, le taux d'hydrolyse du TPP de phase II, en présence de zéolite, est inférieur au taux d'hydrolyse du TPP de phase 1.

Or, dans le cas du TPP selon l'invention, celui-ci a un comportement qui le rapproche d'une phase II, ce qui corroborre ce qui a été dit précédemment.

Selon une forme de mise en oeuvre, on peut substituer dans la composition de 25 à 75 % en poids du TPP par une zéolite de sodium de type A ou 13X.

Le procédé selon l'invention peut être mis en oeuvre dans un dispositif tel que selon les brevets français publiés sous les numéros 2 257 326, 2 419 754 et 2 431 321.

Le produit selon l'invention peut trouver des applications diverses, mais est notamment remarquable d'une part par une forte vitesse d'hydratation et d'autre part par le fait qu'il conduit à des bouillies qui peuvent être pompées et pulvérisées.

On a appréhendé la vitesse d'hydratation de deux manières différentes:

a) par le test dit du ROH de la maniére suivante:

On introduit 200 cm³ d'eau distillée bouillante dans un vase Dewar contenant 50 g de $Na_2SO_4$ anhydre. Le mélange est mis sous agitation mécanique grâce à une hélice tournant à 900 tr/min.

Lorsque la température atteint 80° C, on ajoute 150 g du TPP à tester en 5 secondes. On mesure alors l'évolution de la température.

b) Mesure du taux d'hydratation

On forme 350 g d'une bouillie de référence à 55% de matiére séche de composition suivante.

% en boullie
Dodécylbenzène sulfonate de Na 9
. Stéarate de Na 1,5
. Silicate de Na; R 2,5 (R = Rm = $SiO_2/Na_2O$ = 2)
. Sulfate de Na anhydre 11
. STPP 31
. Eau 45
Total........................... 100,00

On mélange les acides sulfonique et stéarique, qui sont neutralisés à froid par une solution à 10% de la soude caustique.

Après la saponification, on ajoute le silicate de sodium dilué, puis le sulfate de sodium et on régle la température à 80° C. Quand la température atteint 80° C, on ajoute le TPP. (C'est à partir de cet instant que le comportement de la bouillie est étudié au moyen des méthodes qui suivent).

Pendant la confection de la bouillie, on prélève des échantillons sur lesquels on évalue le taux d'hydratation du TPP (% de TPP hydraté par rapport au TPP total présent).

On bloque sur un prélévement l'hydratation après un temps "t" de 20 min par dispersion immédiate de l'échantillon dans un mélange alcool-formamide (50/50).

On élimine ensuite la partie tensio-active par plusieurs traitements à l'alcool et filtration sur verre fritté.

On détermine alors la fraction non hydratée du TPP par reprise d'eau, élimination de l'excès d'eau à l'étuve, et pesée de l'échantillon réhydraté complètement.

On a également indiqué le temps nécessaire pour obtenir 100% d'hydratation.

On mesure l'élévation de température lors de l'hydratation. Cette élévation ($\Delta T$) représente l'écart de température après hydratation compléte; on désignera par $\delta T$ l'écart de température observé à un temps t.

Evaluation de la viscosité de la bouillie

On suit l'évolution de la viscosité de la bouillie de référence pendant sa fabrication en enregistrant l'ampérage ou la variation de tension consommé par un moteur entraînant un agitateur.

La vitesse de rotation de l'agitateur a été maintenue constante soit à 300 tr/min, soit à 750 tr/min.

Cet ampérage, ou tension, sont proportionnels à la viscosité, et l'enregistrement des variations de l'ampérage ou de la tension permet donc de constater l'augmentation de viscosité au cours du temps, et en particulier, permet de relever la durée nécessaire pour atteindre la viscosité maximale.

- Dans les exemples suivants on a utilisé un moteur AXEM à courant continu de la Cie Electro Mécanique type F 12 M 4 de 240 Watts de puissance utile.

Le tripolyphosphate selon l'invention avantageusement présente un ROH à 1 min supérieur à 90°C, et de préférence au moins égal à 95°C, tout en conférant aux bouillies une viscosité leur permettant d'être pompables et pulvérisables, c'est-à-dire de viscosité inférieure à 1,5 et de préférence à 1,2 m A selon le test décrit ou inférieure à 150 mV, de préférence à 120 mV.

L'exemple ci-après est donné à titre illustratif, mais nullement limitatif.

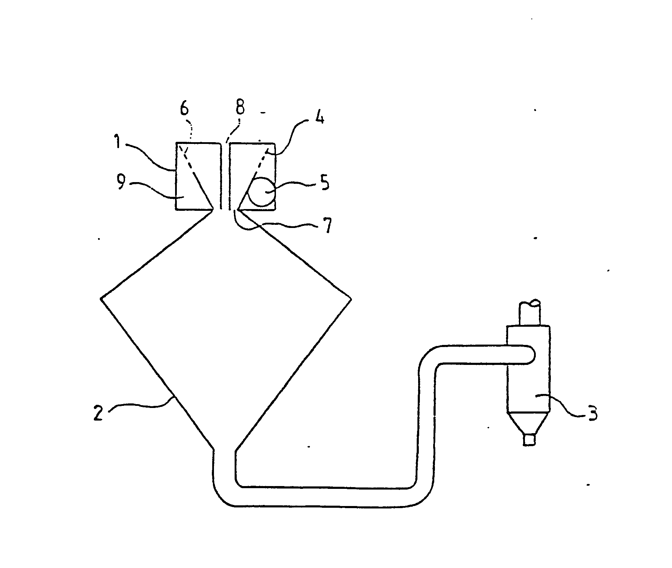

L'installation utilisée est schématisée à la figure annexée.

Elle comprend une tête de dispersion (1), un bicône de réception (2) et un cyclone (3). La tête présente un panier perforé (4) définissant un espace annulaire (9) dans lequel débouche une entrée tangentielle (5). Cet espace permet de réaliser l'écoulement puits-tourbillon symétrique grâce à des orifices tels que (6) et au col (7). La

\* ppm = parties per million identique obtenu au four tournant à une température de 450° C (TPP n° 3) et repris au four à 500° C (TPP n° 4).

phase à traiter est introduite par un conduit axial (8), de manière à la conduire jusque dans la zone de dépression du puits-tourbillon, c'est-à-dire dans la partie amont du bicône (2).

Les gaz de traitement sont amenés chauds dans l'espace annulaire.

Le traitement thermique selon d) est réalisé dans un dispositif non représenté et constitué par un four tubulaire, au cours d'une opération séparée.

Les TPP donnés dans l'exemple ont été obtenus à partir d'une solution d'orthophosphate de qualité technique (acide provenant de l'attaque du mineral par $H_2SO_4$ neutralisé et filtré).

1) <u>Obtention des TPP</u>

Une solution contenant 19,6% $P_2O_5$, 14,2% $Na_2O$ (Na/P = 1,66) et les impuretés suivantes ($Na_2SO_4$: 2,8%; NaF: 0,2%; $SiO_2$: 0,14%; NaCl: 0,3%; Ca: 400 ppm\*; Mg: 400 ppm\*; somme des impuretés métalliques: 1000 ppm\*) est pulvérisée par un courant d'air chauffé à 930°C ayant un débit de 50 Nm³/h. Le débit de la solution est ajusté de façon à obtenir une température de sortie des gaz et du produit de 450°C.

Ce produit principalement sous forme TPP (TPP n° 1) est soumis à un chauffage complémentaire dans un four tubulaire à 500°C pendant 10 minutes (TPP n° 2)

On a reporté dans le tableau les caractéristiques chimiques des TPP n° 1 et n° 2 ainsi que celles d'un TPP commercial de qualité

### Tableau I

| | Procédé | Phase I | Pyro % | Poly % | TPP % |
|---|---|---|---|---|---|
| TPP n° 1\* | TPP n° 1 | 17 | 30 | 1 | 69 |
| TPP n° 2 | TPP n° 1 repris au four à 500° C | 87 | 2 | 0 | 98 |
| TPP n° 3\* | TPP (four tour- nant) | 20 | 3 | 0 | 97 |
| TPP n° 4\* | TPP n° 3 repris au four à 500° C | 77 | 2 | 0 | 98 |

\*exemples comparatifs

$$\text{Phase I} = \frac{\varnothing\text{I}}{\varnothing\text{I} + \varnothing\text{II}} \times 100$$

x 100

2) <u>Prehydratation des TPP</u>

Ces quatre TPP sont préhydratés avant les tests d'une manière identique par pulvérisation d'eau de telle sorte que la perte à 350°C soit voisine de 1,5 %.

## EXEMPLE I

On a résumé dans le tableau 2 les résultats
obtenus

### Tableau II

| TPP N° | ROH 1 min | ROH 5 min | Δ T °C | Taux d'hydratation à 20 min | Temps pour obtenir 100 % d'hydratation | Viscosité maximum D max (mA) | Temps pour D max |
|---|---|---|---|---|---|---|---|
| 1* | 85 | 87 | 6 | 60 | >2 heures | 0,12 | >2 h |
| 2 | 95 | 95,8 | 12,5 | 100 | 13 min | 1,06 | <5 min |
| 3* | 83,5 | 90,1 | 4,8 | 70 | 70 min | 0,88 | 50 |
| 4* | 93 | 93,7 | 10 | 98 | 30 min | 1,56 | 15 |

*exemples comparatifs

Le TPP n° 1 possède une vitesse d'hydratation
faible, sa viscosité est faible.

La vitesse d'hydratation est très nettement
améliorée par un traitement thermique
complémentaire à 500°C selon l'invention (TPP n°
2).

Elle est supérieure à celle mesurée sur des TPP
obtenus au four tournant, qu'ils aient subi ou non
le même traitement complémentaire.

On constate que la viscosité de la bouillie
réalisée avec le TPP n° 2 a augmenté.

Toutefois cette viscosité reste à une valeur qui
permet à la bouillie d'être pompée et pulvérisée.

Si on compare notamment avec le TPP n° 4, on
constate que le traitement qu'il a subi par rapport
au TPP n° 3 a permis d'augmenter le ROH, le taux
de phase 1, le taux d'hydratation, mais que la
viscosité devient telle qu'elle rend une utilisation
redhibitoire, alors même que son taux de phase I
est inférieur à celui du produit selon l'invention.

### Tableau III

| TPP | Phase I | Viscosité en mV | | | | | | δ T | |
|---|---|---|---|---|---|---|---|---|---|
| | | Maximale | 1 min | 2 min | 5 min | 10 min | Stabilisation | °C | Min |
| N° 2 | 87 | 64 à 1 min | 64 | 30 | 22 | 23 | 24 | 12<br>10 | 1 min<br>5 min |
| *N° 5 | 0 | 74 à 3 min 30 | 37 | - | 70 | 70 | 70 | 8<br>13 | 1 min<br>5 min |
| *N° 6 | 31 | 91 à 10 min | 29 | - | 90 | 91 | 91 | 9<br>12 | 1 min<br>5 min |

*exemples comparatifs

$$\text{Phase I} = \frac{\varnothing I}{\varnothing I + \varnothing II} \times 100$$

## EXEMPLE 2

Avec le TPP n° 2, on réalise le milieu suivant:
TPP anhydre 37 5 %
Na$_2$SO$_4$ anhydre 12,5 %
Eau 50 %

On reprend le même dispositif que
précédemment mais avec une vitesse de rotation
de 750 tr/min, en suivant l'évolution de la tension
qui est représentative de l'évolution de la
viscosité de la bouillie et l'élévation de la
température.

Comme on peut le voir dans le tableau suivant,
on observe, avec le TPP selon l'invention, une
montée rapide de la viscosité à 1 min puis une
chute de viscosité jusqu'à une valeur nettement
inférieure à celle de TPP commerciaux (5 et 6) de
pureté chimique identique à ceux des TPP n° 3 et
n° 4, mais de taux de phases différents.

On peut penser que ce comportement inhabituel: brusque montée de viscosité, directement reliée avec une brusque montée de température, serait dû à la formation de cristaux de TPP, 6 $H_2O$ qui, sous l'effet d'un fort cisaillement, subiraient une modification de leur morphologie, accompagnée de l'obtention instantanée d'une bouillie trés fluide.

## EXEMPLE 3

Cet exemple a pour but de démontrer l'influence d'un tensio-actif non ionique, afin de se rapprocher des conditions les plus exigeantes que l'on peut rencontrer lors de la préparation des formules lessivielles.

### TABLEAU IV

| TPP | Phase I | Viscosité Maximale | Viscosité en mV | | | Stabilisation | δ T Maximal |
|-----|---------|--------------------|--------|--------|--------|---------------|-------------|
| | | | 1 min | 5 min | 10 min | | |
| N° 2 | 87 | 100 à 13 min 30 | 35 | 70 | 93 | 100 | 13 à 1 min |
| N° 5* | 0 | 95 à 7 min 30 | 18 | 51 | 79 | 77 | 3 à 7 min 30 |
| N° 6* | 31 | 91 à 9 min | 21 | 46 | 83 | 80 | 3 à 7 min |

*exemplares comparatifs

$$\text{Phase I} = \frac{\varnothing I}{\varnothing I + \varnothing II} \times 100$$

Pour montrer l'influence de la concentration en non-ionique, on reprend le TPP n° 2 dans la même formule dans laquelle on incorpore 4 % de non-ionique soit

$$\frac{\text{non ionique}}{\text{TPP}} = 12,9 \ \%$$

et on abaisse le sulfate à 17,5 %.

Dans ce milieu n° 2, on obtient la même vitesse d'hydratation et une viscosité maximale de 108 mV au bout de 16 min, ce qui est légèrement plus élevée que celle du milieu n° 1 mais qui correspond toujours à une bouillie tout à fait atomisable.

Si on abaisse la vitesse d'agitation à 300 tr/min (faible cisaillement) pour cette même formule, on obtient une viscosité maximale de 110 à 15 min, c'est-à-dire équivalente.

## Milieu n° 1

TPP 31 %
Silicate anhydre
Rapport molaire (Rm) = 2 2,5 %
$Na_2SO_4$ 20,0 %
$H_2O$ 45 %
Non-ionique
C = 18
Groupement oxyéthyléne: 8 1,5 % soit

$$\frac{\text{non ionique}}{\text{TPP}} \ \wedge 5 \ \%$$

On utilise le même test avec une vitesse de rotation de 750 tr/min, avec les mêmes produits.

## EXEMPLE 4

Cet exemple a pour but de montrer les amélioration d'un TPP selon l'invention, en association avec une zéolite 4A comme co-auxiliaire de détergence.

On met en oeuvre le TPP n° 2 et une zéolite du commerce 4A, de diamètre de particule égal à 3 μm dans le milieu suivant:
- eau 100 g
- non-ionique 1 %
- C = 17
- oxyde-éthylene = 25
- TPP préhydraté 1,5 % 25 g
- zéolite 25 g
- sulfate de sodium 17 g

On porte le milieu à 70° C pendant 30 min; cette bouillie est ensuite atomisée à différentes températures correspondant, pour le TPP obtenu, soit à un séchage simple (TPP 6 $H_2O$), soit à un surséchage correspondant à 4 moles d'eau résiduelle par mole de TPP initial.

## Tableau V

| TPP | Taux d'hydrolyse (ou reversion) | |
| --- | --- | --- |
| | Séchage | Surséchage |
| TPP* à 87 % de phase I non conforme à l'invention + zéolite | 16 % | 61 % |
| TPP n° 2 conforme à l'invention + zéolite | 12 % | 35 % |

*ce TPP est obtenu en calcinant au four, à une température de 520° C le TPP n° 6.

Ces exemples montrent donc que, quel que soit le milieu d'hydratation avec ou sans tensio-actif, quelle que soit la nature du tensio-actif et l'intensité du cisaillement, le TPP selon l'invention présente une vitesse d'hydratation élevée, tout en possédant une rhéologie qui le rend pulvérisable sans problème.

## REVENDICATIONS

pour les Etats contractants: BE, CH, DE, FR, GB, IT, LI, LU, NL, SE

1) Procédé d'obtention d'un tripolyphosphate de sodium, caractérisé par le fait que:

a) on prépare une solution d'orthophosphates de sodium mono et disodique de rapport molaire global Na/P compris entre 1,64 et 1,70

b) on forme un écoulement puits-tourbillon symétrique avec une phase gazeuse chaude à grande quantité de mouvement, le rapport des quantités de mouvement entre les phases aqueuse et liquide étant compris entre 100 et 10.000;

c) on introduit la solution d'orthophosphates préparée en a) dans ladite zone de dépression de l'écoulement puits-tourbillon, de manière à provoquer la dispersion et le traitement thermique de ladite solution d'orthophosphates par la phase gazeuse, de manière à obtenir du tripolyphosphate;

d) on soumet le produit obtenu en c) à un traitement thermique complémentaire par chauffage.

2) Procédé selon la revendication 1, caractérisé par le fait que le traitement thermique complémentaire est réalisé en continu pendant un temps de 0,5 à 10 secondes.

3) Procédé selon la revendication 1, caractérisé par le fait que le traitement thermique complémentaire est réalisé en discontinu pendant un temps de 1 à 60 minutes.

4) Procédé selon l'une des revendications 1 à 3, caractérisé par le fait que le traitement selon c) a lieu à une température comprise entre 300 et 450°C

5) Procédé selon l'une des revendications 1 à 3, caractérisé par le fait que le traitement selon d) a lieu à une température comprise entre 400 et 500°C

6) Application du tripolyphosphate obtenu selon l'une des revendications précédents à la détergence.

7) Auxiliaire de détergence comprenant un TPP obtenu selon l'une des revendications 1 à 5 caractérisé par le fait qu'il comprend entre

- 25 et 75 % de TPP
- 75 et 25 % de zéolite A ou X

8) Bouillie pulvérisable comprenant un TPP obtenu selon l'une des revendications 1 à 5 caractérisée par le fait qu'elle comprend:
- de 10 à 40 % de TFP
- de 1 à 20 % de tensio-actifs
- de 10 à 30 % de composés divers
- de 20 à 60 % d'eau

9) Bouillie pulvérisable selon la revendication 9, caractérisée par le fait que les tensio-actifs sont de type non-ioniques.

## REVENDICATIONS

pour l'Etat contractant: AT

1) Procédé d'obtention d'un tripolyphosphate de sodium, caractérisé par le fait que:

a) on prépare une solution d'orthophosphates de sodium mono et disodique de rapport molaire global Na/P compris entre 1,64 et 1,70

b) on forme un écoulement puits-tourbillon symétrique avec une phase gazeuse chaude à grande quantité de mouvement, le rapport des quantités de mouvement entre ces phases aqueuse et liquide étant compris entre 100 et 10.000;

c) on introduit la solution d'orthophosphates préparée en a) dans ladite zone de dépression de l'écoulement puits-tourbillon, de manière à provoquer la dispersion et le traitement thermique de ladite solution d'orthophosphates par la phase gazeuse, de manière à obtenir du tripolyphosphate;

d) on soumet le produit obtenu en c) à un traitement thermique complémentaire par chauffage.

2) Procédé selon la revendication 1, caractérisé par le fait que le traitement thermique complémentaire est réalisé en continu pendant un temps de 0,5 à 10 secondes.

3) Procédé selon la revendication 1, caractérisé par le fait que le traitement thermique complémentaire est réalisé en discontinu pendant un temps de 1 à 60 minutes.

4) Procédé selon l'une des revendications 1 à 3, caractérisé par le fait que le traitement selon c) a lieu à une température comprise entre 300 et 450°C

5) Procédé selon l'une des revendications 1 à 3, caractérisé par le fait que le traitement selon d) a lieu à une tempérsture comprise entre 400 et 500°C

6) Procédé de préparation de compositions lessivielles, caractérisé par le fait qu'il met en oeuvre un auxiliaire de détergence comprenant un TPP obtenu selon l'une des revendications précédentes, ledit auxiliaire de détergence renfermant entre
- 25 et 75 % de TPP
- 75 et 25 % de zéolite A ou X

7) Procédé de préparation de compositions lessivielles par atomisation d'une bouillie, caractérisé par le fait que ladite bouillie comprend:
- de 10 à 40 % de TPP obtenu selon le procédé des revendications 1 à 5
- de 1 à 20 % de tensio-actifs
- de 10 à 30 % de composés divers
- de 20 à 60 % d'eau

8) Procédé selon la revendication 7, caractérisé par le fait que les tensio-actifs sont de type non-ioniques.

**Patentansprüche**

für die Vertragsstaaten BE, CH, DE, FR, GB, IT, LI,LU, NL, SE
1. Verfahren zur Herstellung eines Natriumtripolyphosphats, dadurch gekennzeichnet, daß man:
a) eine Lösung von Mononatrium- und Dinatriumorthophosphaten mit einem Gesamt-Molverhältnis Na/P von 1,64 bis 1,70 herstellt,
b) mit einer Heißgasphase mit hohem Impuls (Bewegungsgröße) eine symmetrische schraubenförmige, sich verengende Strömung erzeugt, wobei das Verhältnis der Impulse von Gasphase und Flüssigkeitsphase zueinander 100 bis 10 000 beträgt,
c) die unter a) hergestellte Orthophosphatlösung in die Zone des Unterdrucks der schraubenförmigen sich verengenden Strömung so einführt, daß die Dispersion und die Wärmebehandlung der Orthophosphatlösung durch die Gasphase hervorgerufen wird, sodaß man Tripolyphosphat erhält,
d) das unter c) erhaltene Produkt einer zusätzlichen Wärmebehandlung durch Erhitzen unterwirft.
2. Verfahren nach Anspruch 1, dadurch gekennzeichnet, daß die zusätzliche Wärmebehandlung kontinuierlich während einer Zeit von 0,5 bis 10 Sekunden durchgeführt wird.

3. Verfahren nach Anspruch 1, dadurch gekennzeichnet, daß die zusätzliche Wärmebehandlung diskontinuierlich während einer Zeit von 1 bis 60 Minuten durchgeführt wird.
4. Verfahren nach einem der Ansprüche 1 bis 3, dadurch gekennzeichnet, daß die Behandlung gemäß c) bei einer Temperatur von 300 bis 450°C stattfindet.
5. Verfahren nach einem der Ansprüche 1 bis 3, dadurch gekennzeichnet, daß die Behandlung gemäß d) bei einer Temperatur von 400 bis 500°C stattfindet.
6. Anwendung des nach einem der vorangehenden Ansprüche erhaltenen Tripolyphosphats für Reinigungszwecke.
7. Reinigungshilfsmittel umfassend ein nach einem der Ansprüche 1 bis 5 erhaltenes TPP, dadurch gekennzeichnet, daß es
- 25 bis 75 % TPP und
- 75 bis 25 % Zeolith A oder X enthält.
8. Zerstäubbare Aufschlämmung umfassend ein nach den Ansprüchen 1 bis 5 erhaltenes TPP, dadurch gekennzeichnet, daß sie umfaßt:
- 10 bis 40 % TPP
- 1 bis 20 % grenzflächenaktive Mittel
- 10 bis 30 % verschiedene Verbindungen
- 20 bis 60 % Wasser.
9. Zerstäubbare Aufschlämmung nach Anspruch 9, dadurch gekennzeichnet, daß die grenzflächenaktiven Mittel nicht-ionisch sind.

**Patentansprüche**

ür den Vertragsstaat AT
1. Verfahren zur Herstellung eines Natriumtripolyphosphats, dadurch gekennzeichnet, daß man
a) eine Lösung von Mononatrium- und Dinatriumorthophosphaten mit einem Gesamt-Molverhältnis Na/P von 1,64 bis 1,70 herstellt,
b) mit einer Heißgasphase mit hohem Impuls (Bewegungsgröße) eine symmetrische schraubenförmige, sich verengende Strömung erzeugt, wobei das Verhältnis der Impulse von Gasphase und Flüssigkeitsphase zueinander 100 bis 10 000 beträgt,
c) die unter a) hergestellte Orthophosphatlösung in die Zone des Unterdrucks der schraubenförmigen, sich verengenden Strömung so einführt, daß die Dispersion und die Wärmebehandlung der Orthophosphatlösung durch die Gasphase hervorgerufen wird, so daß man Tripolyphosphat erhält,
d) das unter c) erhaltene Produkt einer zusätzlichen Wärmebehandlung durch Erhitzen unterwirft.
2. Verfahren nach Anspruch 1, dadurch gekennzeichnet, daß die zusätzliche Wärmebehandlung kontinuierlich während einer Zeit von 0,5 bis 10 Sekunden durchgeführt wird.
3. Verfahren nach Anspruch 1, dadurch gekennzeichnet, daß die zusätzliche Wärmebehandlung diskontinuierlich während einer Zeit von 1 bis 60 Minuten durchgeführt wird.

4. Verfahren nach einem der Ansprüche 1 bis 3, dadurch gekennzeichnet, daß die Behandlung gemäß c) bei einer Temperatur von 300 bis 450°C stattfindet.

5. Verfahren nach einem der Ansprüche 1 bis 3, dadurch gekennzeichnet, daß die Behandlung gemäß d) bei einer Temperatur von 400 bis 500°C stattfindet.

6. Verfahren zur Herstellung von Waschmittelzubereitungen, dadurch gekennzeichnet, daß man von einem Reinigungshilfsmittel Gebrauch macht, das ein nach einem der Ansprüche 1 bis 5 erhaltenes TPP umfaßt, und daß das Reinigungshilfsmittel
- 25 bis 75 % TPP und
- 75 bis 25 % Zeolith A oder X enthält.

7. Verfahren zur Herstellung von Waschmittelzubereitungen durch Zerstäuben einer Aufschlämmung, dadurch gekennzeichnet, daß die Aufschlämmung umfaßt:
- 10 bis 40 % TPP, erhalten nach den Ansprüchen 1 bis 5,
- 1 bis 20 % grenzflächenaktive Mittel,
- 10 bis 30 % verschiedene Verbindungen,
- 20 bis 60 % Wasser.

8. Verfahren nach Anspruch 7, dadurch gekennzeichnet, daß die grenzflächenaktiven Mittel nichtionisch sind.

## Claims

for the contracting States: BE, CH, DE, FR, GB, IT, LI, LU, NL, SE

1. A process for producing a sodium tripolyphosphate characterised by:

a) preparing a solution of nonosodium and disodium orthophosphates with an overall molar ratio of Na/P of between 1.64 and 1.70,

b) forming a symmetrical axial flow-vortex flow configuration with a hot gaseous phase of great momentum, the ratio of the levels of momentum as between the gaseous and liquid phases being between 100 and 10,000;

c) introducing the solution of orthophosphates which is prepared in a) into said depression zone of the axial flow-vortex flow configuration so as to cause dispersion and thermal treatment of said solution of orthophosphates by the gaseous phase so as to produce tripolyphosphate; and

d) subjecting the product obtained in c) to a complementary thermal treatment by means of heating.

2. A process according to claim 1 characterised in that the complementary thermal treatment is carried out continuously for a period of from 0.5 to 10 seconds.

3. A process according to claim 1 characterised in that the complementary thermal treatment is carried out discontinuously for a period of from 1 to 60 minutes.

4. A process according to one of claims 1 to 3 characterised in that the treatment in accordance with c) is effected at a temperature of between 300 and 450°C.

5. A process according to one of claims 1 to 3 characterised in that the treatment in accordance with d) is effected at a temperature of between 400 and 500°C.

6. Use of the tripolyphosphate obtained in accordance with one of the preceding claims in detergence.

7. A detergent builder comprising a TPP obtained in accordance with one of claims 1 to 5 characterized in that it comprises:
- between 25 and 75% of TPP, and
- between 75 and 25% of zeolite A or X.

8. A sprayable slurry comprising a TPP obtained in accordance with one of claims 1 to 5 characterised in that it comprises:
- from 10 to 40% of TPP,
- from 1 to 20% of surface active agents,
- from 10 to 30% of various compounds, and
- from 20 to 60% of water.

9. A sprayable slurry according to claim 9 characterised in that the surface active agents are of non-ionic type.

## Claims

for the contracting State: AT

1. A process for producing a sodium tripolyphosphate characterised by:

a) preparing a solution of monosodium and disodium orthophosphates with an overall molar ratio of Na/P of between 1.64 and 1.70,

b) forming a symmetrical axial flow-vortex flow configuration with a hot gaseous phase of great momentum, the ratio of the levels of momentum as between the gaseous and liquid phases being between 100 and 10,000;

c) introducing the solution of orthophosphates which is prepared in a) into said depression zone of the axial flow-vortex flow configuration so as to cause dispersion and thermal treatment of said solution of orthophosphates by the gaseous phase so as to produce tripolyphosphate; and

d) subjecting the product obtained in c) to a complementary thermal treatment by means of heating.

2. A process according to claim 1 characterised in that the complementary thermal treatment is carried out continuously for a period of from 0.5 to 10 seconds.

3. A process according to claim 1 characterised in that the complementary thermal treatment is carried out discontinuously for a period of from 1 to 60 minutes.

4. A process according to one of claims 1 to 3 characterised in that the treatment in accordance with c) is effected at a temperature of between 300 amd 450°C.

5. A process according to one of claims 1 to 3 characterised in that the treatment in accordance with d) is effected at a temperature of between 400 and 500°C.

6. A process for the preparation of detergent compositions, characterised in that it uses a detergent builder comprising a TPP obtained in accordance with one of the preceding claims, said builder containing:
- between 25 and 75% of TPP, and
- between 75 and 25% of zeolite A or X.

7. A process for the preparation of detergent compositions by atomization of a slurry characterised in that said slurry comprises:
- from 10 to 40% of TPP obtained in accordance with the process of claims 1 to 5,
- from 1 to 20% of surface active agents,
- from 10 to 30% of various compounds, and
- from 20 to 60% of water.

8. A process according to claim 7 characterised in that the surface active agents are of non-ionic type.